# NEUE EUROPÄISCHE PATENTSCHRIFT

(11) **EP 0 554 472 B2**
(45) Veröffentlichungstag und Bekanntmachung des Hinweises auf die Entscheidung über den Einspruch: **13.06.2001**
(45) Hinweis auf die Patenterteilung: 08.05.1996
(21) Anmeldenummer: 92101691.1
(22) Anmeldetag: 01.02.1992
(51) Int. Cl.: F16D 69/04, F16D 65/12, F16D 13/64

(54) **Reibbelag od. dgl.**
Friction lining
Garniture de friction

(43) Veröffentlichungstag der Anmeldung: 11.08.1993
(60) Teilanmeldung: 95101958.7
(73) Patentinhaber: Raybestos Industrie-Produkte GmbH, 54497 Morbach (DE)
(72) Erfinder: Müller, Ulrich, W-4473 Haselünne (DE); Schulz, Norbert, W-5277 Marienheide (DE)
(74) Vertreter: Gille Hrabal Struck Neidlein Prop Roos

(56) Entgegenhaltungen:
- DE-B- 1 286 353
- US-A- 1 648 267
- US-A- 4 476 965

## Beschreibung

Die Erfindung betrifft Reibbeläge od. dgl., für Kupplungsbeläge gemäß Oberbegriff von Anspruch 1, bekannt aus der Druckschrift US 1,515,284.

Bei bekannten Reibbelägen dieser Gattung "Schaltbare Reibkupplungen" von S. Winkelmann und H. Harmuth, Springer-Verlag, 19B5, Seite 177 bis 183) befinden sich die Löcher zum Durchstecken von der Befestigung an Trägerscheiben dienenden Nieten inner-halb der Reibfläche. Hierdurch wird die Reibfläche unterbrochen, was zu einem ungleichförmigen Reibverhalten der Reibpaarungen führt und wegen der notwendigen Überdimensionierung ein verhältnismäßig großes Massenträgheitsmoment des Reibbelages zur Folge hat.

Der Erfindung liegt die Aufgabe zugrunde, die Konstanz des Reibverhaltens der Reibpaarungen deutlich zu verbessern und das axiale Massenträgheitsmoment der Reibbeläge stark zu reduzieren.

Letzteres ist besonders wichtig, wenn die Reibbeläge in Schaltkupplungen von vollsynchronisierten mechanischen Getrieben eingesetzt werden sollen.

Die gestellte Aufgabe wird mit einem Reibbelag der eingangs genannten Gattung gelöst, welcher die kennzeichnenden Merkmale des Patentanspruches 1 aufweist.

Vorteilhafte Ausgestaltungen der Erfindung sind Gegenstand der Unteransprüche.

Bei den erfindungsgemäßen Reibbelägen ist die Ringbreite schmaler bzw. geringer als bei bekannten Reibbelägen. Außerdem befinden sich die Nietlöcher und die Führungslöcher, die zum Befestigen der Reibbeläge an einer Kupplungsscheibe außerhalb der eigentlichen Reibfläche.

Durch die Erfindung wird ein Reibbelag od. dgl. neuer Geometrie geschaffen, bei dem das axiale Massenträgheitsmoment deutlich reduziert ist, weil einmal die Masse des Reibbelages selbst verringert wird und weil zweitens seine Form dabei so gestaltet wird, daß diese Trägheitsmomentenreduzierung durch die Geometrie noch eine Unterstützung erfährt.

Die Verringerung des Massenträgsheitsmomentes von Reibbelägen für Kupplungen von mechanischen Schaltgetrieben bewirkt eine Verkürzung der Schaltzeiten, eine Verringerung der Schaltkräfte, eine Schonung der Schaltelemente einschließlich Synchronringe und nicht zuletzt eine Verbesserung des Schaltkomforts. So lassen sich mit einem erfindungsgemäßen Reibbelag die Trägheitsmomente des Reibbelages zwischen 35 und 70% reduzieren. Wird ein derartiger Reibbelag an einer Kupplungsscheibe eingesetzt, so läßt sich das Trägheitsmoment der so ausgestatteten Kupplungsscheibe zwischen 10 und 35% reduzieren, wobei die Wirksamkeit der Kupplung sorgar noch verbessert wird.

Da die zum Durchstecken von Nieten bestimmten Löcher innerhalb und/oder außerhalb der Reibfläche im Ringkörper angeordnet sind, ergibt sich der weitere Vorteil eines konstanteren übertragungsmomentes, da die Schwankungsbreite des Reibradius konstruktiv eingeengt ist. Außerdem wird bei der erfindungsgemäßen Ausführungsform des Reibbelages durch das Fehlen von geschlossenen Bohrungen in der Reibfläche der von axialen Gleitlagern bekannte "Tascheneffekt", der eine Mischreibung und damit das sogenannte Fading begünstigt, verhindert was zusätzlich zur Stabilisierung des Reibverhaltens beiträgt.

Befindet sich die Reibfläche radial außerhalb der zum Durchstecken von Nieten bestimmten Löcher oder öffnungen, ergibt sich ein zusätzlicher Raumgewinn im zentralen Bereich bzw. im Bereich der Nabe der den Reibbelag tragenden Scheibe, so daß z. B. bei Kupplungsscheiben im Durchmesser größere Torsionsdämpferelemente eingesetzt werden können, wodurch Getriebegeräusche wirksamer vermieden werden können.

Bei der Ausführungsform der Erfindung, bei welcher der Ringkörper des Reibbelages in der der Reibfläche gegenüberliegenden Stirnfläche wenigstens eine ringförmige Vertiefung oder Rille enthält, ergibt sich zusätzlich eine deutliche Verringerung des Gewichtes des Reibbelages und damit des Massenträgheitsmomentes, ohne dabei die Reibfläche selbst reduzieren zu müssen, obwohl dies auch möglich wäre. Da die an der Rückseite des Reibbelages vorgesehenen ringförmigen Vertiefungen oder Rillen vorzugsweise nicht tiefer als das Maß der Dicke des Belages bis zum Nietboden plus Nietkopf ausmachen soll, wird durch diese Vertiefungen oder Rillen die durch Verschleiß abzutragende Dicke des Reibbelages nicht eingeschränkt.

Durch die Erfindung werden neuartige Reibbelagkonstruktionen od. dgl. geschaffen, die für Schaltkupplungen von Kraftfahrzeugen bestimmt sind. Aufgrund einer Änderung der Geometrie bzw. der Ausgestaltung dieses Reibbelages wird eine Optimierung des Reibverhaltens erzielt.

In der Zeichnung sind Ausführungsbeispiele von erfindungsgemäßen Reibbelägen schematisch dargestellt, und zwar zeigt
- Fig. 1: eine Draufsicht eines Reibbelages mit radial außen liegender Reibfläche,
- Fig. 2: eine Draufsicht eines gegenüber Fig. 1 abgewandelten Reibbelages, mit radial innen liegender Reibfläche,
- Fig. 3: eine Draufsicht auf eine weitere Ausführungsform eines erfindungsgemäßen Reibbelages mit am Außen- und Innenumfang außerhalb der Reibzone angebrachten Zungen, die radiale öffnungen zum Durchstecken von Nieten enthalten,
- Fig. 4: einen Querschnitt des Reibbelages aus Fig. 3 nach Linie X-X,
- Fig. 5: eine Draufsicht noch einer weiteren Ausführungsform eines erfindungsgemäßen Reibbelages mit am Außen- und Innenumfang außerhalb der Reibzone in wellenförmigen Ansätzen angebrachten Bohrungen, die zum Vernieten dienen,
- Fig. 6: einen Querschnitt des Reibbelages aus Fig. 5 nach Linie XIV-XIV,
- Fig. 7: eine Draufsicht einer gegenüber Fig. 2 abgewandelten Ausführungsform des Reibbelages, dessen nach außen offene Langlochschlitze teilweise bis in die Reibfläche ragen, und
- Fig. 8: einen Querschnitt des Reibbelages aus Fig. 7 nach Linie XX - XX.

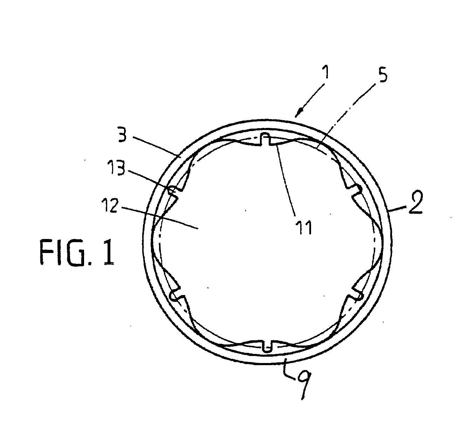

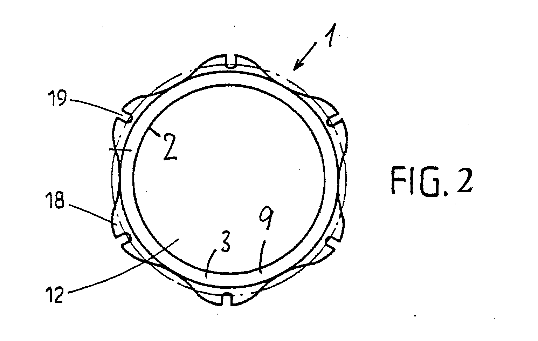

Der in Fig. 1 und 2 dargestellte Reibbelag 1 für eine nicht dargestellte Fahrzeugkupplung hat einen kreisscheibenförmigen Ringkörper 2, der im äußeren Umfangsbereich einen als Reibfläche dienenden hochstehenden Ringabschnitt 3 aufweist.

An der Innenseite des die Reibfläche 9 aufweisenden Ringabschnittes 3 wellenförmig ausgebildete Zungen 11 vorgesehen sind, die sich radial nach innen in die zentrale öffnung 12 des Reibbelages 1 bis über den Kreis 5 hinaus erstrecken, auf dem die Niete angeordnet sind. Die Zungen 11 sind gegenüber der Reibfläche 9 zurückversetzt. Jede Zunge 11 enthält ein zur öffnung 12 offenes Langloch 13. Die Langlöcher 13 sind zur Aufnahme je eines nicht dargestellten Nietes bestimmt und werden beim Herstellen der Beläge durch einen Heißpreßvorgang mit eingepreßt.

Der in Fig. 2 dargestellte Reibbelag 1 entspricht weitgehend dem in Fig. 1 dargestellten Reibbelag 1, wobei an dem Außenumfang des die Reibfläche 9 aufweisenden Ringabschnittes 3 radial vorstehende, in ihrer äußeren Kontur wellenförmig ausgebildete Zungen 18 angeformt sind, die jeweils ein nach außen sich öffnendes Langloch 19 zur Aufnahme eines nicht dargestellten Nietes enthalten.

Bei allen zuvor beschriebenen Ausführungsformen ist der die Reibfläche aufweisende und Löcher bzw. Langlöcher enthaltende Ringkörper 2 in einem Stück geformt, beispielsweise aus Reibmaterial mit und ohne eingearbeitetem Verstärkungsmaterial einstückig gepreßt.

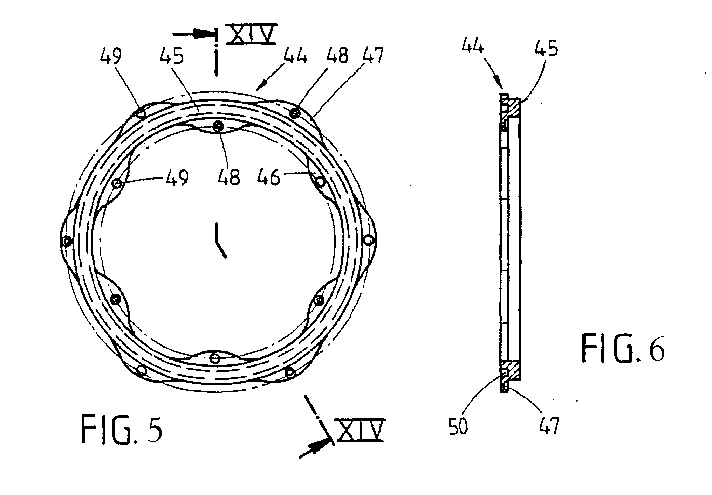

Alle in Fig. 1 bis 2 gezeigten Reibbelagkonstruktionen können auch für zweireihige Vernietung ausgeführt werden. Beispiele hierfür zeigen die Figuren 3 bis 6.

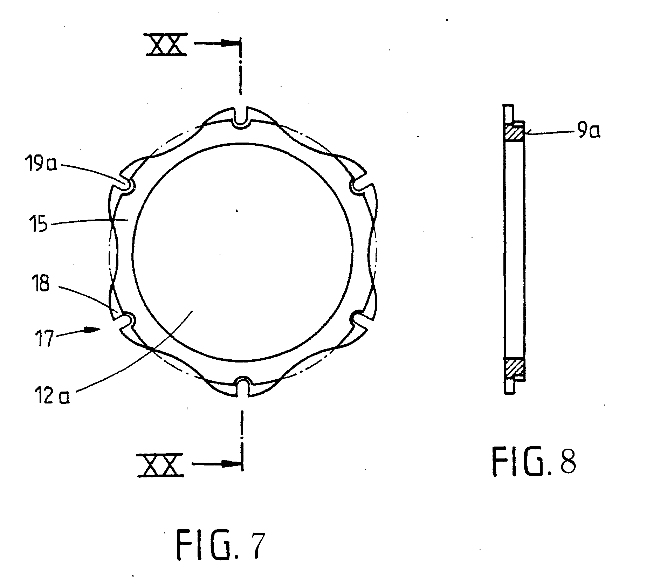

Bei dem in Fig. 3 und 7 gezeigten Reibbelag 38 sind radial innerhalb und radial außerhalb der die Reibzone bildenden ringförmigen Reibfläche 39 in Draufsicht wellenförmige Zungen 40 und 41 angeordnet, die jeweils ein radial verlaufendes Langloch 42 bzw. 43 enthalten, das zu seinem äußeren Ende offen ist. Diese Langlöcher 42 und 43 dienen zum Durchstecken von Nieten.

Wie insbesondere Fig. 4 zeigt, schließen die Zungen 40 und 41 mit der Rückseite des Reibbelages 38 bündig ab, haben jedoch eine geringere Dicke als der Reibbelag im Bereich der ringförmigen Reibfläche 39, so daß die durch die Langlöcher 42 und 43 gesteckte Niete gegenüber der Reibfläche 39 zurückversetzt sind.

Der in Fig. 5 und 6 gezeigte Reibbelag 44 hat wiederum eine die Reibzone bildende ringförmige Reibfläche 45, an der radial nach innen und nach außen vorstehende, im Grundriß wellenförmig ausgebildete Zungen 46 und 47 angeordnet sind. Diese Zungen 46 und 47 sind, wie Fig. 5 zeigt, umfangsmäßig gegeneinander versetzt angeordnet und enthalten jeweils ein Loch 48 bzw. 49, wobei die Löcher 48 mit einer Ansenkung zur Aufnahme eines Nietkopfes versehen sind, während die Löcher 49 einen durchgehend gleichen Querschnitt aufweisen und zum Durchstecken des Schaftes eines Nietes von der entgegengesetzten Seite bestimmt sind.

Wiederum verlaufen die Zungen 46 und 47 bündig bzw. fluchtend mit der Rückseite des Reibbelages 44 und haben eine geringere Dicke als der Reibbelag 44 im Bereich der Reibfläche 45.

Von der Rückseite ist in den Reibbelag 44 eine umlaufende ringförmige Vertiefung 50 bzw. Rille eingeformt, deren Tiefe etwa der Dicke der Zungen 46,47 entspricht. Der Reibbelag 44 kann daher bis dicht über die Zungen 46 und 47 abgenutzt werden, ohne daß die Vertiefung 50 freigelegt wird, wodurch die Größe der Reibfläche 45 beeinträchtigt würde.

Die ringförmige Vertiefung 50 hat auch beim Reibbelag 44 den Zweck einer Gewichtseinsparung.

Der in Fig. 7 und 8 dargestellte Reibbelag zeichnet sich dadurch aus, daß die Langlochschlitze in die Reibflächenzone tragen können, denn sie bringen nicht, weil sie einseitig offen sind, den von axialen Gleitlagern bekannten Tascheneffekt von rundum geschlossenen Nietlochöffnungen in der Reibfläche bekannter Reibbeläge.

Langlochschlitze lassen sich im Gegensatz zu Bohrungen preßtechnisch leichter einbringen.

## Patentansprüche

1. Reibbelag für Kupplungen, mit einem einstückigen kreisscheibenförmigen Ringkörper (2) aus Reibmaterial, dessen eine Stirnfläche eine kreis ringförmige Reibfläche (9) aufweist und der eine zentrale Öffnung (12) und in seinem Ringkörper über dessen Umfang verteilt Löcher (13; 19, 42, 43, 48, 49) zum Durchstecken von Nieten enthält, wobei
die zum Durchstecken der Nieten bestimmten Löcher (42, 43,) außerhalb der Reibfläche (9) im Ringkörper (2) angeordnet, sind,
**dadurch gekennzeichnet, daß**
die zum Durchstecken der Nieten bestimmten Löcher in zungenförmigen radialen Ansätzen (11,18,40,41,47,46) des Ringkörpers (2) vorgesehen sind.

2. Reibbelag nach Anspruch 1, dadurch gekennzeichnet, daß die Reibfläche des Ringkörpers axial über die Zungenförmigen Ansätze vorsteht.

3. Reibbelag nach Anspruch 1 oder 2, dadurch gekennzeichnet, daß die zum Durchstecken von Nieten bestimmten Löcher (13,19,42,43) als radiale Langlochschlitze ausgebildet sind.

4. Reibbelag nach einem der Ansprüche 2 oder 3, dadurch gekennzeichnet, daß die in axialer Richtung vorstehende Reibfläche (9) radial außerhalb der die zum Durchstecken von Nieten bestimmten Löcher (13) enthaltenden zungenförmigen Ansätze (11) vorgesehen ist.

5. Reibbelag nach einem der Ansprüche 2 oder 3, dadurch gekennzeichnet, daß die Reibfläche (9) radial innerhalb der die zum Durchstecken von Nieten bestimmten Löcher (19) enthaltenden Zungenformigen Ansätze (18) vorgesehen ist.

6. Reibbelag nach einem der Ansprüche 1 bis 5, dadurch gekennzeichnet, daß der Ringkörper in der der Reibfläche gegenüberliegende Stirnfläche wenigstens eine ringförmige Vertiefung (50) oder Rille enthält.

7. Reibbelag nach Anspruch 6, dadurch gekennzeichnet, daß die ringförmig Vertiefung (50) einen trapezförmigen Querschnitt aufweist.

8. Reibbelag nach Anspruch 6 oder 7, dadurch gekennzeichnet, daß die ringförmigen Vertiefung (50) mit ihren Boden bis in die Tiefe des Bodens der Löcher zum Durchstecken von Nieten reicht.

9. Reibbelag nach einem der Ansprüche 6 bis 8, dadurch gekennzeichnet, daß die ringförmig Vertiefung (50) oder Rillen radial inner- und/oder außerhalb der auf einem Kreis angeordneten Löcher zum Durchstecken von Nieten vorgesehen ist.

## Claims

1. Friction lining for clutches having a single-piece circular disc-shaped annular body (2) of friction material, of which one front has a circular annular friction surface (9), and which has a central opening (12) and holes (13; 19, 42, 43, 48, 49) distributed over the periphery of its annular body for receiving rivets,
the holes (42, 43) being designed to receive the rivets being arranged in the annular body (2) clear of the friction surface (9),
**characterized in that**
the holes designed to receive rivets are provided in tongue-like radial projections (11, 18, 40, 41, 47, 46) of the annular body (2).

2. Friction lining according to claim 1, characterized in that the friction surface of the annular body projects axially beyond the tongue-like projections.

3. Friction lining according to claim 1 or 2, characterized in that the holes (13, 19, 42, 43) designed to receive rivets are formed as radially elongated slots.

4. Friction lining according to one of the claims 2 or 3, characterized in that the friction surface (9) projecting in axial direction is provided radially outside the tongue-like projections (11) containing the holes (13) designed to receive rivets.

5. Friction lining according to one of the claims 2 or 3, characterized in that the friction surface (9) is provided radially inside the tongue-like projections (11) containing the holes (19) designed to receive rivets.

6. Friction lining according to one of the claims 1 through 5, characterized in that the annular body has at least one annular recess (50) or groove in the front which is opposite the friction surface.

7. Friction lining according to claim 6, characterized in that the annular recess (50) has a trapezoidal cross-section.

8. Friction lining according to claim 6 or 7, characterized in that the base of the annular recess (50) extends as far as the depth of the base of the holes for receiving rivets.

9. Friction lining according to one of the claims 6 through 8, characterized in that the annular recess (50) or groove is provided radially inside and/or outside the holes arranged on a circle and designed to receive rivets.

## Revendications

1. Garniture de friction pour des embrayages, comportant un corps annulaire (2) d'une pièce en forme de disque circulaire, constitué d'un matériau de friction, dont une surface frontale comporte une surface de friction (9) en forme d'anneau de cercle, et qui est pourvu d'une ouverture centrale (12) et de trous (13; 19, 42, 43, 48, 49) servant de passage de rivets répartis sur le pourtour du corps annulaire,
les trous de réception des rivets étant disposés en dehors de la surface de friction (9) prévue sur le corps annulaire (2),
**caractérisée en ce que** les trous de réception de rivets sont prévus dans des appendices radiaux (11, 18, 40, 41, 47, 46), en forme de languettes, du corps annulaire (2).

2. Garniture de friction selon la revendication 1, caractérisée en ce que la surface de friction du corps annulaire fait saillie axialement au-delà des appendices en forme de languettes.

3. Garniture de friction selon la revendication 1 ou 2, caractérisée en ce que les trous (13, 19, 42, 43) de réception de rivets sont réalisés comme des encoches radiales.

4. Garniture de friction selon l'une des revendications 2 ou 3, caractérisée en ce que la surface de friction (9) faisant saillie dans une direction axiale est située radialement en dehors des appendices (11), en forme de languettes, comportant les trous (13) de réception de rivets.

5. Garniture de friction selon l'une des revendications 2 ou 3, caractérisée en ce que la surface de friction (9) est située radialement à l'intérieur des appendices (11), en forme de languettes, comportant les trous (19) de réception de rivets.

6. Garniture de friction selon l'une des revendications 1 à 5, caractérisée en ce que le corps annulaire comporte, dans la surface frontale opposée à la surface de friction, au moins un creux (50) ou une rainure de forme annulaire.

7. Garniture de friction selon la revendication 6, caractérisée en ce que le creux de forme annulaire aune section de forme trapézoidale.

8. Garniture de friction selon la revendication 6 ou 7, caractérisée en ce que le creux de forme annulaire s'étend par son fond jusqu'à la profondeur de la base des trous de réception de rivets.

9. Garniture de friction selon l'une des revendications 6 à 8, caractérisée en ce que le creux (50) ou la rainure de forme annulaire est situé radialement à l'intérieur et/ou à l'extérieur des trous de réception de rivets et répartis sur un cercle.
